# NEUE EUROPÄISCHE PATENTSCHRIFT

(11) **EP 0 607 968 B2**
(45) Veröffentlichungstag und Bekanntmachung des Hinweises auf die Entscheidung über den Einspruch: **08.01.2003**
(45) Hinweis auf die Patenterteilung: 22.09.1999
(21) Anmeldenummer: 94100803.9
(22) Anmeldetag: 20.01.1994
(51) Int. Cl.: B29C 45/16

(54) **Verfahren zum Herstellen eines Auskleidungsteiles sowie insbesondere danach hergestelltes Auskleidungsteil**
Method for making a lining and in particular lining obtained thereby
Procédé de fabrication d'un revêtement et plus particulièrement revêtement obtenu par ce procédé

(30) Priorität: 20.01.1993 DE 4301444
(43) Veröffentlichungstag der Anmeldung: 27.07.1994
(73) Patentinhaber: EMPE Autoteile GmbH, 80807 München (DE)
(72) Erfinder: Stickling, Heinz, D-95519 Vorbach (DE)
(74) Vertreter: Goddar, Heinz J., Dr.

(56) Entgegenhaltungen:
- EP-A- 0 431 574
- DE-A- 2 944 797
- DE-A- 4 023 209
- DE-A- 4 114 289
- DE-A- 4 122 412
- DE-A- 4 124 297
- GB-A- 673 508
- GB-A- 2 193 923
- US-A- 3 914 475
- PATENT ABSTRACTS OF JAPAN vol. 7, no. 269 (M-259)(1414) 30. November 1983 & JP-A-58 147 330 (MATSUSHITA DENKO)
- DATABASE WPI Section Ch, Week 9001, Derwent Publications Ltd., London, GB; Class A11, AN 90-005502 & SE-A-8 704 538 (KUNGSÖRS PLAST AB)
- PATENT ABSTRACTS OF JAPAN vol. 8, no. 262 (M-341)(1699) 30. November 1984 & JP-A-59 133 028 (DAINIPPON INSATSU)
- PATENT ABSTRACTS OF JAPAN vol. 17, no. 507 (M-1479)13. September 1993 & JP-A-05 131 487 (YAMAHA CORP)
- Zeitschrift: Kunststoffe 80(1990) 9, S.997-1002

## Beschreibung

Die Erfindung betrifft ein Verfahren zum Herstellen eines eine Sicht- und eine Rückseite aufweisenden Auskleidungsteiles, bei dem ein Rohling, der in unbelastetem Zustand bereits seine endgültige Form hat, jedoch nicht selbständig formstabil ist, zum Beispiel ein vorgeformtes und/oder profiliertes, ggf. mit Ornamenten, Schriftzeichen oder dergleichen versehenes Holzfurnierteil, an seiner Rückseite mit einer Verstärkungslage versehen und in einer zweiteilig aus Unterund Oberform bestehenden Spritzgießform an seiner Sichtseite durch Spritzgießen mit einer zumindest teiltransparenten Vorderseitenbeschichtung in optischer Oberflächenqualität ausgestattet wird, sowie ein Auskleidungsteil, insbesondere hergestellt nach diesem Verfahren, welches aus einem Rohling, wie Holzfurnierteil oder dergleichen, besteht, der an seiner Rückseite mit einer Verstärkungslage und an seiner Sichtseite mit einer durch Spritzgießen aufgebrachten zumindest halbtransparenten Vorderseitenbeschichtung in optischer Oberflächenqualität versehen ist.

Aus der GB-A-673,508 und der GB-A-2,199,323 sind Verfahren zum Umhüllen von Gegenständen mit thermoplastischem Material, insbesondere Acrylharz, bekannt, um mit diesem Material umschlossene Gegenstände ästhetisch ansprechend zur Schau zu stellen. Keine der Druckschriften betrifft die Herstellung eines Auskleidungsteiles. Bei den gemäß den Entgegenhaltungen verarbeiteten Rohlingen handelt es sich im Falle der GB-A-673,508 um fotografische oder zeichnerische Darstellungen, bei GB-A-2,199,323 um nicht näher spezifizierte Ausstellungsgegenstände.

Gegenstand der nachveröffentlichten deutschen Patentanmeldung P 41 24 297.1-16, die internen Stand der Technik der Anmelderin beschreibt, ist ein Verfahren der vorstehend beschriebenen Art, bei dem in der aus einer Unterform und einer Oberform bestehenden Spritzgießform die Kanten und Verbindungsstellen von Rohling und Verstärkungslage mittels der Vorderseitenbeschichtung versiegelt werden. Während es bis dahin üblich war, Auskleidungsteile, die beispielsweise aus einer Holzschicht, Gewebeschicht oder Folie mit einer rückseitigen Verstärkung bestehen, an der Sichtseite mit einer hochglänzenden Lackbeschichtung zu versehen, ist eine derartige Lackbeschichtung bei dem älteren. Vorschlag überflüssig, weil im Spritzgießverfahren die Vorderseitenbeschichtung sogleich in optischer Oberflächenqualität hergestellt werden kann.

Die bis dahin bekannte Vorgehensweise, eine Lackbeschichtung vorzusehen, bestand darin, daß auf den betreffenden Rohling, nachdem er profiliert worden ist, beispielsweise durch Biegen, von der konvexen Seiten durch Sprühen oder Spritzen der Lack aufgebracht wird. Dabei sind im allgemeinen mehrere Lagen erforderlich, um einerseits die gewünschte Versiegelung, andererseits auch eine möglichst glänzende Oberfläche zu erhalten. Als Lacke werden dabei solche auf Polyester- oder Polyurethan-Basis eingesetzt, wobei es in den meisten Fällen erforderlich ist, das Auskleidungsteil nach dem Lackieren noch zu schleifen. Außerdem müssen seitlich vorstehende Nasen oder Läufer, bestehend aus dem Lackmaterial, entfernt werden.

Der Nachteil dieser bekannten Vorgehensweise besteht nicht nur darin, daß Umweltprobleme auftreten, weil der Lack beim Versprühen in die umgebende Atmosphäre gelangt, sondern insbesondere auch darin, daß kein Schutz der Kanten des Holzes gegen Eindringen von Feuchtigkeit oder dergleichen möglich ist, so daß ein derartiger Schutz in einem zusätzlichen Arbeitsgang aufgebracht werden muß.

Demgegenüber zeichnet sich der ältere Vorschlag nach der P 41 24 297.1-16 bereits dadurch aus, daß eine perfekte Versiegelung des fertigen Auskleidungsteiles möglich ist und daß Umweltprobleme weitgehend vermieden werden. Bei dem Verfahren nach dem älteren Vorschlag läßt sich eine hochglänzende und kein Nachschleifen mehr erfordernde Oberfläche erzeugen. Es ist möglich, einen vollkommenen Kantenschutz in einem einzigen Arbeitsgang zu erreichen, wobei bei entsprechender Ausbildung der Form die Beschichtung bis auf die Rückseite des Auskleidungsteiles gezogen werden kann. Damit findet in dem Maße, wie es gewünscht ist, eine vollständige Oberflächenveredelung statt. Das fertiggestellte Auskleidungsteil hat eine hohe Maßhaltigkeit, weil kein "freier" Trocknungsvorgang mehr notwendig ist. Es wird kein Material verschwendet, da nur die zum Beschichten erforderliche Menge an Material eingesetzt werden muß. Vorzugsweise wird bei dem Verfahren nach dem älteren Vorschlag für die Beschichtung ein Material verwendet, welches sich unterhalb der Selbstentzündungstemperatur des Rohlings verflüssigt. Dies ist nicht nur aus Herstellungsgründen praktikabel, vielmehr sind auch eine spätere Separierung von Beschichtung und Rohling und damit ein Recycling möglich. Eine verflüssigte Beschichtung läßt sich beispielsweise vom Rohling einfach durch Abtropfen oder auch mittels Zentrifugeneinwirkung entfernen.

Das Verfahren nach der P 41 24 297.1 - 16 hat sich durchaus bewährt, jedoch bringt die Herstellung der Verstärkungslage, die bei dem bekannten Verfahren in vorgeformtem Zustand mit dem Rohling in die Spritzgießform eingebracht wird, Schwierigkeiten mit sich und ist verhältnismäßig aufwendig.

Der Erfindung liegt daher die Aufgabe zugrunde, das gattungsgemäße verfahren dahingehend weiterzubilden, daß die Herstellung eines aus Rohling, Vorderseitenbeschichtung und Verstärkungslage bestehenden Auskleidungsteiles unter weiterer Qualitätserhöhung vereinfacht wird. Ferner soll ein Auskleidungsteil mit verbesserter Qualität hergestellt werden.

Erfindungsgemäß wird diese Aufgabe bei einem Verfahren der gattungsgemäßen Art dadurch gelöst, daß der Rohling zunächst in eine erste Oberform eingebracht wird, an deren Formfläche, die im wesentlichen der sichtseitigen Oberflächenkontur des Rohlings entspricht, die Sichtseite des Rohlings zur Anlage gebracht wird; daß dann die Unterform, deren Formfläche so ausgebildet ist, daß an der Rückseite des Rohlings ein den gewünschten Abmessungen der Verstärkungslage entsprechender erster Formhohlraum entsteht, mit der ersten Oberform zusammengeführt wird; daß daraufhin in einem ersten Spritzgießschritt aus einem ersten Kunststoffmaterial die Verstärkungslage als Rückseitenbeschichtung spritzgegossen wird; daß dann die Unterform mit dem daran verbleibenden Halbprodukt aus Rohling und Rückseitenbeschichtung von der ersten Oberform gelöst wird; daß anschließend die Unterform mit einer zweiten Oberform zusammengeführt wird, deren Formfläche so ausgebildet ist, daß an der Sichtseite des Rohlings ein den gewünschten Abmessungen der Vorderseitenbeschichtung entsprechender zweiter Formhohlraum entsteht; und daß schließlich in einem zweiten Spritzgießschritt aus einem zweiten Kunststoffmaterial die Vorderseitenbeschichtung spritzgegossen wird.

Dabei kann vorgesehen sein, daß das erste Kunststoffmaterial und das zweite Kunststoffmaterial im wesentlichen identisch sind.

Die Erfindung sieht auch vor, daß das erste Kunststoffmaterial und das zweite Kunststoffmaterial verschieden sind.

Nach der Erfindung kann auch so vorgegangen werden, daß die Rückseitenbeschichtung und die Vorderseitenbeschichtung mit im wesentlichen gleicher Stärke hergestellt werden.

Ferner schlägt die Erfindung vor, daß (ein) Kunststoffmaterial(ien) verwendet wird/werden, welche(s) sich unterhalb der Selbstentzündungstemperatur des Rohlings verflüssigt/verflüssigen.

Nach der Erfindung kann auch so vorgegangen werden, daß bei Verarbeitung ein mit wenigstens einem Ausschnitt versehenen Rohlings Formhälften mit derartigen Formflächen verwendet werden, daß der Ausschnitt im ersten Spritzgießschritt von der Rückseitenbeschichtung frei bleibt, jedoch im zweiten Spritzgießschritt mit der Vorderseitenbeschichtung an seinen Kanten bis zur Rückseite der Rückseitenbeschichtung durchgehend ausgekleidet wird.

Die Erfindung sieht ferner vor, daß durch entsprechende Ausbildung der Formflächen der Unterund/oder der Oberform(en) sämtliche Kantenbereiche des Rohlings mit der Vorderseitenbeschichtung mindestens bis zur Rückseite der Rückseitenbeschichtung ausgekleidet werden.

Eine weitere Ausführungsform der Erfindung ist dadurch gekennzeichnet, daß die Rückseitenbeschichtung nahe den Kantenbereichen durch die Vorderseitenbeschichtung überdeckt wird.

Nach der Erfindung kann auch vorgesehen sein, daß der Rohling vor dem Einbringen in die erste Oberform an seiner Rückseite mit wenigstens einem Funktionselement, wie Befestigungselement oder dergleichen, versehen wird.

Alternativ hierzu kann vorgesehen sein, daß in die Unterform ein Funktionselement, wie Befestigungselement oder dergleichen eingebracht und im ersten Spritzgießschritt mit dem Rohling verbunden wird.

Nach der Erfindung kann auch vorgesehen sein, daß Unter- und Oberformen mit im wesentlichen vertikal angeordneten Formflächen verwendet werden; und daß der Rohling vor dem ersten Spritzgießschritt in der ersten Oberform festgeklemmt wird.

Das erfindungsgemäße Ausstattungsteil ist dadurch gekennzeichnet, daß die Verstärkungslage des Rohlings durch Spritzgießen als Rückseitenbeschichtung (ausgebildet ist.

Dabei kann vorgesehen sein, daß der Rohling mindestens einen ihn durchsetzenden Ausschnitt aufweist.

Auch schlägt die Erfindung vor, daß die Vorderseitenbeschichtung die Kantenbereiche des Rohlings mindestens bis zur Rückseite der Rückseitenbeschichtung bedeckt.

Eine weitere Ausführungsform der Erfindung schlägt ein Ausstattungsteil vor, welches dadurch gekennzeichnet ist, daß die Vorderseitenbeschichtung die Rückseitenbeschichtung nahe den Kantenbereichen des Rohlings überdeckt.

Dabei kann vorgesehen sein, daß mit der Vorderseitenbeschichtung versehene Ausschnitt- oder Außenkantenecken mit Krümmungsradius Null vorgesehen sind.

Der Erfindung liegt die überraschende Erkenntnis zugrunde, daß es gelingt, das gattungsgemäße Verfahren und das Auskleidungsteil nach dem älteren Vorschlag gemäß P 41 24 297.1-16 noch weiter zu verbessern, indem auch die Verstärkungslage im Spritzgießverfahren aus Kunststoffmaterial hergestellt wird. Hierzu findet eine Spritzgießform Verwendung, die in der beanspruchten Weise in einem ersten Spritzgießschritt die Herstellung der Rückseitenbeschichtung, ggf. unter Einschluß von Funktionselementen, ermöglicht, während dann, unter Beibehaltung ein und derselben Unterform, mittels einer zweiten Oberform in einem Spritzgießschritt die Vorderseitenbeschichtung in endgültiger optischer Oberflächenqualität hergestellt wird. Die erste Oberform ist dabei bezüglich ihrer Formfläche so ausgebildet, daß der Rohling fest daran anliegt, so daß also in diesem ersten Spritzgießschritt lediglich ein Füllen des Formhohlraumes zwischen dem Rohling und der Oberform mit Kunststoffmaterial erfolgt, woraufhin dann die erste Oberform gelöst wird. Dabei bleibt das Halbprodukt aus Rohling und als Verstärkungslage dienender Rückseitenbeschichtung an der Unterform haften. Anschließend wird dann die zweite Oberform eingesetzt, deren Formfläche so ausgebildet ist, daß zwischen ihr und dem Rohling ein zweiter Formhohlraum entsteht, der in dem zweiten Spritzgießschritt mit Kunststoffmaterial gefüllt wird.

Besonders vorteilhaft ist es, wenn für die Rückseiten- und die Vorderseitenbeschichtung gleiche Schichtdicken verwendet werden, da dann eine hohe Beständigkeit des hergestellten Auskleidungsteiles gegen Temperaturwechselbeanspruchungen, d. h. gleichmäßige Formstabilität, gewährleistet ist. Die Schichtdicken können beispielsweise 0,3 bis 3 mm betragen. Die Kunststoffmaterialien können natürlich nicht nur glasklar-transparent, sondern beispielsweise auch gefärbt sein, um den gewünschten optischen Oberflächeneindruck zu gewährleisten.

Wenn das Auskleidungsteil der Witterung ausgesetzt ist, empfiehlt es sich, als Kunststoffmaterialien UV-beständige und/oder klimabeständige Materialien einzusetzen. Natürlich sollte das Kunststoffmaterial kratzfest sein. Als bevorzugtes Kunststoffmaterial sind Polymethylmetacrylate zu nennen. Als Rohling kann natürlich nicht nur ein ggf. profiliertes und/oder vorgeformtes Furnierteil, wie Edelholzfurnier, welches eben, jedoch auch gebogen sein kann, verwendet werden, vielmehr lassen sich auch Rohlinge aus Metall oder Kunststoff einsetzen. Von besonderem Vorteil ist es, daß sich auch Ausschnitte innerhalb des Auskleidungsteiles problemlos herstellen und versiegeln lassen, und zwar mit frei wählbaren Kantenradien, insbesondere einem Kantenradius Null. Hierzu wird der Rohling in noch unbeschichtetem Zustand entsprechend gestanzt oder gesägt. Ein besonderer Vorteil der Erfindung besteht somit darin, daß sich radienlose Ausschnitte oder Ecken herstellen lassen, wie sie aus ästhetischen Gründen beim z. B. Einbau von Instrumenten in Armaturenbretter von Kraftfahrzeugen wünschenswert sind.

Weitere Merkmale und Vorteile der Erfindung ergeben sich aus der nachstehenden Beschreibung, in der ein Ausführungsbeispiel anhand der schematischen Zeichnung im einzelnen erläutert ist. Dabei zeigt:
- Fig. 1: ein Ausführungsbeispiel einer erfindungsgemäß verwendbaren Spritzgießform in einem ersten Spritzgießschritt, im Schnitt senkrecht zur Ebene des Auskleidungsteiles;
- Fig. 2: in Fig. 1 entsprechender Darstellung die Spritzgießform in einem zweiten Verfahrensschritt; und
- Fig. 3: in Fig. 1 und Fig. 2 entsprechender Darstellung ein nach der Erfindung hergestelltes Auskleidungsteil im Schnitt senkrecht zu seiner Hauptfläche.

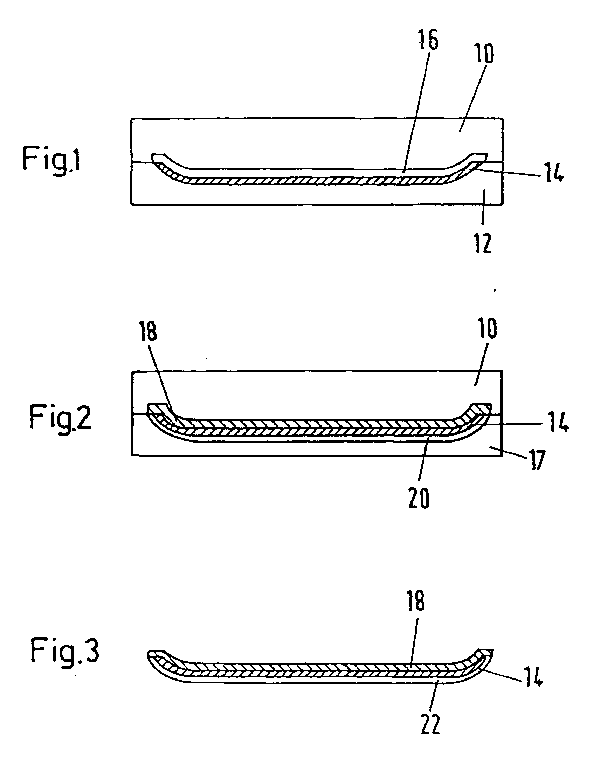

Wie Fig. 1 erkennen läßt, weist die Spritzgießform nach der Erfindung dort eine Unterform 10 sowie eine Oberform 12 auf. In die aus den beiden Formhälften 10,12 bestehende Spritzgießform ist ein vorgeformter Rohling 14, bestehend aus einem Holzfurnierteil, eingeklemmt. Zwischen dem Rohling 14 und der Formfläche der Unterform 10 ist ein erster Formhohlraum 16 gebildet.

Bei dem in Fig. 2 gezeigten Ausführungsbeispiel besteht die Spritzgießform aus der Unterform 10 und einer zweiten Oberform 17, wobei zwischen dem nunmehr in der nachstehend noch beschriebenen Weise bereits mit einer Rückseitenbeschichtung 18 versehenen Rohling 14 und der Formfläche der zweiten Oberform 17 ein zweiter Formhohlraum 20 gebildet ist.

Fig. 3 zeigt, daß das fertige Auskleidungsteil aus dem Rohling 14, der Rückseitenbeschichtung 18 und einer Vorderseitenbeschichtung 22 besteht.

Das erfindungsgemäße Verfahren wird bei dem gezeigten Ausfürhungsbeispiel wie folgt ausgeführt:
Zunächst wird der Rohling 14 außerhalb der Spritzgießform in seine entgültige Form gebracht, beispielsweise durch Prägen oder dergleichen, wobei er jedenfalls nicht nur gebogen, sondern auch mit Ausschnitten (durch Stanzen oder Sägen) versehen werden kann. Dieser Rohling 14 hat zwar in unbelastetem Zustand bereits seine endgültige Form, ist jedoch bei Belastung nicht formstabil, z. B., weil er aus Materialersparnisgründen (Edelholzl) sehr dünn ausgebildet ist.

Der Rohling 14 wird dann in die erste Oberform 12 eingebracht, vorzugsweise eingeklemmt, wobei letzteres insbesondere bei vertikal angeordneten Formflächen zweckmäßig ist. Die Formfläche der ersten Unterform 12 ist so ausgebildet, daß der Rohling 14 mit seiner in Fig. 1 unten befindlichen Sichtseite dicht und bündig an der Formfläche der ersten Oberform 12 anliegt. Anschließend wird die Form durch Heranfahren der Oberform 10 an die erste Unterform 12, oder auch umgekehrt, geschlossen, wobei zwischen der Rückseite des Rohlings 14 und der Formfläche der Oberform 10 der erste Formhohlraum 16 gebildet wird. Dieser wird nun in einem ersten Spritzgießschritt mit Kunststoffmaterial gefüllt, wodurch die Rückseitenbeschichtung 18 gebildet wird. Anschließend werden die beiden Formhälften 10, 12 auseinandergefahren, wobei das Halbprodukt, welches aus dem Rohling 14 und der Rückseitenbeschichtung 18 besteht, an der Unterform 10 verbleibt.

Anschließend wird die Unterform 10 mit der zweiten Oberform 17 zusammengefahren, wobei zwischen der Formfläche der zweiten Oberform 17 und der Sichtseite des Rohlings 14 der Formhohlraum 20 verbleibt, der dann in einem zweiten Spritzgießschritt mit Kunststoffmaterial gefüllt wird. Hierdurch wird die Vorderseitenbeschichtung 22 gebildet, so daß das endgültige Auskleidungsteil gemäß Fig. 3 entsteht.

## Patentansprüche

1. Verfahren zum Herstellen eines eine Sicht- und eine Rückseite aufweisenden Auskleidungsteiles, bei dem ein Rohling, der in unbelastetem Zustand bereits seine endgültige Form hat, jedoch nicht selbständig formstabil ist, zum Beispiel ein vorgeformtes und/oder profiliertes, ggf. mit Ornamenten, Schriftzeichen oder dergleichen versehenes Holzfurnierteil, an seiner Rückseite mit einer Verstärkungslage versehen und in einer zweiteilig aus Unter- und Oberform bestehenden Spritzgießform an seiner Sichtseite durch Spritzgießen mit einer zumindest teiltransparenten Oberflächenqualität ausgestattet wird, wobei der Rohling zunächst in eine erste Oberform eingebracht wird, an deren Formfläche, die im wesentlichen der sichtseitigen Oberflächenkontur des Rohlings entspricht, die Sichtseite des Rohlings zur Anlage gebracht wird; dann die Unterform, deren Formfläche so ausgebildet ist, daß an der Rückseite des Rohlings ein den gewünschten Abmessungen der Verstärkungslage kungslarge entsprechender erster Formhohlraum entsteht, mit der ersten Oberform zusammengeführt wird; daraufhin in einem ersten Spritzgießschritt aus einem ersten Kunststoffmaterial die Verstärkungslage als Rückseitenbeschichtung spritzgegossen wird; dann die Unterform mit dem daran verbleibenden Halbprodukt aus Rohling und Rückseitenbeschichtung von der ersten Oberform gelöst wird; anschließend die Unterform mit einer zweiten Oberform zusammengeführt wird, deren Formfläche so ausgebildet ist, daß an der Sichtseite des Rohlings ein den gewünschten Abmessungen der Vorderseitenbeschichtung entsprechender zweiter Formhohlraum entsteht; und schließlich in einem zweiten Spritzgießschritt aus einem zweiten Kunststoffmaterial die Vorderseitenbeschichtung spritzgegossen wird.

2. Verfahren nach Anspruch 1, **dadurch gekennzeichnet, daß** das erste Kunststoffmaterial und das zweite Kunststoffmaterial im wesentlichen identisch sind.

3. Verfahren nach Anspruch 1, **dadurch gekennzeichnet, daß** das erste Kunststoffmaterial und das zweite Kunststoffmaterial verschieden sind.

4. Verfahren nach einem der vorangehenden Ansprüche, **dadurch gekennzeichnet, daß** die Rückseitenbeschichtung und die Vorderseitenbeschichtung mit im wesentlichen gleicher Stärke hergestellt werden.

5. Verfahren nach einem der vorangehenden Ansprüche, **dadurch gekennzeichnet, daß** (ein) Kunststoffmaterial(ien) verwendet wird/werden, welche(s) sich unterhalb der Selbstentzündungstemperatur des Rohlings verflüssigt/verflüssigen.

6. Verfahren nach einem der vorangehenden Ansprüche, **dadurch gekennzeichnet, daß** bei Verarbeitung eines mit wenigstens einem Ausschnitt versehenen Rohlings Formhälften mit derartigen Formflächen verwendet werden, daß der Ausschnitt im ersten Spritzgießschritt von der Rückseitenbeschichtung frei bleibt, jedoch im zweiten Spritzgießschritt mit der Vorderseitenbeschichtung an seinen Kanten bis zur Rückseite der Rückseitenbeschichtung durchgehend ausgekleidet wird.

7. Verfahren nach einem der vorangehenden Ansprüche, **dadurch gekennzeichnet, daß** durch entsprechende Ausbildung der Formflächen der Unterund/oder der Oberform(en) sämtliche Kantenbereiche des Rohlings mit der Vorderseitenbeschichtung mindestens bis zur Rückseite der Rückseitenbeschichtung ausgekleidet werden.

8. Verfahren nach Anspruch 7, **dadurch gekennzeichnet, daß** die Rückseitenbeschichtung nahe den Kantenbereichen durch die Vorderseitenbeschichtung überdeckt wird.

9. Verfahren nach einem der vorangehenden Ansprüche, **dadurch gekennzeichnet, daß** der Rohling vor dem Einbringen in die erste Oberform an seiner Rückseite mit wenigstens einem Funktionselement, wie Befestigungselement oder dergleichen, versehen wird.

10. Verfahren nach einem der Ansprüche 1 bis 8, **dadurch gekennzeichnet, daß** in die Unterform ein Funktionselement, wie Befestigungselement oder dergleichen, eingebracht und im ersten Spritzgießschritt mit dem Rohling verbunden wird.

11. Verfahren nach einem der vorangehenden Ansprüche, **dadurch gekennzeichnet, daß** Unter- und Oberformen mit im wesentlichen vertikal angeordneten Formflächen verwendet werden; und daß der Rohling vor dem ersten Spritzgießschritt in der ersten Oberform festgeklemmt wird.

12. Auskleidungsteil, bestehend aus einem nicht selbständig formstabilen Rohling, wie Holzfurnierteil oder dergleichen, der an seiner Rückseite mit einer Verstärkungslage und an seiner Sichtseite mit einer durch Spritzgießen aufgebrachten, zumindest halbtransparenten Vorderseitenbeschichtung in optischer Oberflächenqualität versehen ist, wobei die Verstärkungslage des Rohlings durch Spritzgießen als Rückseitenbeschichtung ausgebildet ist.

13. Auskleidungsteil nach Anspruch 12, **dadurch gekennzeichnet, daß** der Rohling (14) mindestens einen ihn durchsetzenden Ausschnitt aufweist.

14. Auskleidungsteil nach Anspruch 12 oder 13, **dadurch gekennzeichnet, daß** die Vorderseitenbeschichtung (22) die Kantenbereiche des Rohlings (14) mindestens bis zur Rückseite der Rückseitenbeschichtung (18) bedeckt.

15. Auskleidungsteil nach Anspruch 14, **dadurch gekennzeichnet, daß** die Vorderseitenbeschichtung (22) die Rückseitenbeschichtung (18) nahe den Kantenbereichen des Rohlings (14) überdeckt.

16. Auskleidungsteil nach einem der Ansprüche 12 bis 15, **dadurch gekennzeichnet, daß** mit der Vorderseitenbeschichtung (22) versehene Ausschnittoder Außenkantenecken mit Krümmungsradius Null vorgesehen sind.

## Claims

1. A method of producing a lining part having a visible side and a back, wherein a blank which in the unstressed state already has its final shape but is not independently dimensionally stable, e.g. a preformed and/or profiled wood veneering part, optionally provided with decorations, lettering or the like, is coated at the back with a reinforcing layer whereas its visible side is provided with an at least partly transparent front coating of surface quality by injection moulding in a two-part injection mould comprising a mould bottom and a mould top, wherein the blank is first placed in a first mould top having a moulding surface which substantially corresponds to the visible surface contour of the blank and against which the visible side of the blank is brought to abut; next the mould bottom, whose moulding surface is so shaped that a first mould cavity corresponding to the desired dimensions of the reinforcing layer is produced at the back of the blank, is brought together with the first mould top; next in a first injection-moulding step using a first plastic material, the reinforcing layer is injection-moulded in the form of a back coating; next the mould bottom and the semi-finished product remaining therein and comprising the blank and the back coating is released from the first mould top; the mould bottom is then brought together with a second mould top having a moulding surface so shaped that a second mould cavity corresponding to the desired dimensions of the front coating is produced on the visible side of the blank; and finally the front coating is injection-moulded in a second injection-moulding step using a second plastic material.

2. A method according to claim 1, **characterised in that** the first plastic material and the second plastic material are substantially identical.

3. A method according to claim 1, **characterised in that** the first plastic material and the second plastic material are different.

4. A method according to any of the preceding claims, **characterised in that** the back coating and the front coating are produced with substantially the same thickness.

5. A method according to any of the preceding claims, **characterised by** use of one or more plastic materials which liquefy below the spontaneous ignition temperature of the blank.

6. A method according to any of the preceding claims, **characterised in that** when a blank formed with at least one cut-out is processed, use is made of half-moulds having moulding surfaces such that in the first injection-moulding step the cut-out remains free from the back coating but in the second injection-moulding step the cut-out is continuously lined with the front coating at its edges as far as the back of the back coating.

7. A method according to any of the preceding claims, **characterised in that**, by suitably shaping the moulding surfaces of the mould bottom and/or the mould top or tops, all the edge regions of the blank are lined with the front coating at least up to the back of the back coating.

8. A method according to claim 7, **characterised in that** the back coating is covered by the front coating near the edge regions.

9. A method according to any of the preceding claims, **characterised in that** before being placed in the first top mould, the back of the blank is provided with at least one functional element such as a fastening element or the like.

10. A method according to any of claims 1 to 8, **characterised in that** a functional element such as a fastening element or the like is placed in the mould bottom and bonded to the blank in the first injection-moulding step.

11. A method according to any of the preceding claims, **characterised by** use of a mould bottom and mould tops having substantially vertical moulding surfaces, and in that the blank is firmly clamped in the first mould top before the first injection-moulding step.

12. A lining part, consisting of a blank which is not independently dimensionally stable, e.g. a wood veneering part or the like, which is provided at the back with a reinforcing layer and along its visible side with an at least semitransparent front coating of optical surface quality applied by injection moulding, wherein the reinforcing layer of the blank is formed by injection moulding as a back side coating.

13. A lining part according to claim 12, **characterised in that** the blank (14) has at least one cut-out which extends through it.

14. A lining part according to claim 12 or 13, **characterised in that** the front coating (22) covers the edge regions of the blank (14) at least as far as the back of the back coating (18).

15. A lining part according to claim 14, **characterised in that** the front coating (22) covers the back coating (18) near the edge regions of the blank (14).

16. A lining part according to any of claims 12 to 15, **characterised in that** cut-out or outer-edge corners with zero radius of curvature are provided with the front coating (22).

## Revendications

1. Procédé de fabrication d'une pièce de garniture comportant un côté apparent et un côté arrière, procédé dans lequel une ébauche possédant déjà sa forme définitive à l'état non chargé sans être toutefois en elle-même indéformable, par exemple une pièce en contre-plaqué préformée et/ou profilée éventuellement pourvue d'ornements, de caractères ou analogues, est munie sur son côté arrière d'une couche de renfort et sur son côté apparent, dans un moule à injection en deux parties constitué d'un moule inférieur et d'un moule supérieur, par moulage par injection, d'une qualité de surface au moins partiellement transparente, l'ébauche étant d'abord introduite dans un premier moule supérieur, sur la surface de moule duquel est appliqué le côté apparent de l'ébauche, ladite surface de moule correspondant sensiblement au contour superficiel côté apparent de l'ébauche; le moule inférieur, dont la surface de moule est conçue pour créer sur le côté arrière de l'ébauche une première cavité de moule correspondant aux dimensions souhaitées de la couche de renfort, est ensuite assemblé avec le premier moule supérieur; dans une première étape de moulage par injection, la couche de renfort formant revêtement de côté arrière est alors moulée par injection avec une première matière plastique; le moule inférieur avec, demeuré à l'intérieur, le demi-produit constitué de l'ébauche et du revêtement de côté arrière est ensuite séparé du premier moule supérieur ; le moule inférieur est ensuite assemblé avec un second moule supérieur dont la surface de moule est conçue pour créer, sur le côté apparent de l'ébauche, une seconde cavité de moule correspondant aux dimensions souhaitées du revêtement de côté avant ; et enfin, dans une seconde étape de moulage par injection, le revêtement de côté avant est moulé par injection avec une seconde matière plastique.

2. Procédé selon la revendication 1, **caractérisé en ce que** la première matière plastique et la seconde matière plastique sont sensiblement identiques.

3. Procédé selon la revendication 1, **caractérisé en ce que** la première matière plastique et la seconde matière plastique sont différentes.

4. Procédé selon une des revendications précédentes, **caractérisé en ce que** le revêtement de côté arrière et le revêtement de côté avant sont fabriqués avec sensiblement la même épaisseur.

5. Procédé selon une des revendications précédentes, **caractérisé en ce que** la (les) matière(s) plastique(s) utilisée(s) se fluidifie(nt) au-dessous de la température d'auto-inflammation de l'ébauche.

6. Procédé selon une des revendications précédentes, **caractérisé en ce qu'**en cas de traitement d'une ébauche pourvue d'au moins une découpe on utilise des demi-moules possédant des surfaces de moule telles que, dans la première étape de moulage par injection, la découpe demeure exempte de revêtement de côté arrière mais, dans la seconde étape de moulage par injection, soit entièrement garnie du revêtement de côté avant au niveau de ses bords jusqu'au côté arrière du revêtement de côté arrière.

7. Procédé selon une des revendications précédentes, **caractérisé en ce que**, grâce à une conception appropriée des surfaces de moule du (des) moule(s) inférieur et/ou supérieur, toutes les zones de bord de l'ébauche sont garnies avec le revêtement de côté avant au moins jusqu'au côté arrière du revêtement de côté arrière.

8. Procédé selon la revendication 7, **caractérisé en ce que** le revêtement de côté arrière est recouvert par le revêtement de côté avant près des zones de bord.

9. Procédé selon une des revendications précédentes, **caractérisé en ce qu'**avant son introduction dans le premier moule supérieur, l'ébauche est pourvue, sur son côté arrière, d'au moins un élément fonctionnel, tel qu'un élément de fixation ou analogue.

10. Procédé selon l'une des revendications 1 à 8, **caractérisé en ce qu'**un élément fonctionnel, tel qu'un élément de fixation ou analogue, est introduit dans le moule inférieur et relié à l'ébauche dans la première étape de moulage par injection.

11. Procédé selon une des revendications précédentes, **caractérisé en ce que** les moules inférieur et supérieur utilisés comportent des surfaces de moule disposées sensiblement verticalement; et **en ce que** l'ébauche est immobilisée dans le premier moule supérieur avant la première étape de moulage par injection.

12. Pièce de garniture, constituée d'une ébanche sans être en elle-même indéformable, telle qu'une pièce en contre-plaqué ou analogue, pourvue sur son côté arrière d'une couche de renfort et sur son côté apparent d'un revêtement de côté avant au moins semitransparent appliqué par moulage par injection avec une qualité de surface optique, la couche de renfort de l'ébauche (14) réalisée par moulage par injection tenant lieu de revêtement de côté arrière (18).

13. Pièce de garniture selon la revendication 12, **caractérisée en ce que** l'ébauche (14) est pourvue d'au moins une découpe qui la traverse.

14. Pièce de garniture selon la revendication 12 ou 13, **caractérisée en ce que** le revêtement de côté avant (22) recouvre les zones de bord de l'ébauche (14) au moins jusqu'au côté arrière du revêtement de côté arrière (18).

15. Pièce de garniture selon la revendication 14, **caractérisée en ce que** le revêtement de côté avant (22) recouvre le revêtement de côté arrière (18) près des zones de bord de l'ébauche (14).

16. Pièce de garniture selon l'une des revendications 12 à 15, **caractérisée en ce que** des coins de découpe ou de bord extérieur pourvus du revêtement de côté avant (22) possèdent un rayon de courbure nul.
